Europäisches Patentamt

European Patent Office

Office européen des brevets

(19)

(11) Veröffentlichungsnummer: **0 197 915**
**B1**

(12) # EUROPÄISCHE PATENTSCHRIFT

(45) Veröffentlichungstag der Patentschrift:
07.02.90

(21) Anmeldenummer: 86890071.3

(22) Anmeldetag: 20.03.86

(51) Int. Cl.⁴: **F16J 15/56**, F16J 15/26,
B30B 15/00, B30B 9/04

(54) **Dichtsystem für ein Hochdruckgefäss.**

(30) Priorität: 01.04.85 AT 961/85

(43) Veröffentlichungstag der Anmeldung:
15.10.86 Patentblatt 86/42

(45) Bekanntmachung des Hinweises auf die Patenterteilung:
07.02.90 Patentblatt 90/6

(84) Benannte Vertragsstaaten:
BE CH DE FR GB IT LI NL SE

(56) Entgegenhaltungen:
EP-A- 0 054 015
FR-A- 2 228 992
GB-A- 2 072 303
US-A- 3 914 968

(73) Patentinhaber: SIMMERING-GRAZ-PAUKER
AKTIENGESELLSCHAFT, Brehmstrasse 16,
A-1110 Wien(AT)

(72) Erfinder: Ribar, Norbert, Jägerstrasse 62-64/6/12,
A-1200 Wien(AT)
Erfinder: Tuppa, Herbert, Dipl.-Ing.Dr.techn.,
Donaustrasse 103, A-2344 Maria Enzersdorf(AT)
Erfinder: Mutzl, Josef, Dipl.-Ing., Kleiner
Pfarrgasse 20/10, A-1020 Wien(AT)
Erfinder: Holzerbauer, Ernst, Dipl.-Ing.,
Kaiserstrasse 1/1/5a, A-1070 Wien(AT)

(74) Vertreter: Köhler-Pavlik, Johann, Dipl.-Ing.,
Margaretenplatz 5, A-1050 Wien(AT)

## Beschreibung

Die Erfindung betrifft ein Dichtsystem für ein Hochdruckgefäß mit einer dynamischen und einer statischen Dichtung, bestehend aus einem zylindrischen Mantel, in welchen ein Kolben eintaucht, insbesondere als Werkzeug einer hydraulischen Säulenpresse mit einer dynamischen und einer statischen Dichtung.

In der EP-A 54 015 wird eine Filterpresse beschrieben, die zur Erzeugung von Zellstoff dient und im wesentlichen aus einem beweglichen zylindrischen Mantel besteht, in welchem zwei einander gegenüberliegende Kolben angeordnet sind, die relativ zueinander beweglich sind. Die Kolben sind jeweils mit einem Dichtungsring versehen, wobei auf die Querschnittsform und das Material des Dichtringes nicht näher eingegangen wird. Der obere Kolben übt somit, abgesehen vom Preßvorgang, im Verein mit dem Dichtring eine Schließfunktion aus, die im Zuge der Abnützung des Dichtrings sowie durch Verschmutzung abnehmen wird.

Durch die DE-C 24 20 335 ist eine statische und eine dynamische Dichtung für eine Hochdruckpresse bekannt, die im oberen Bereich des Druckgefäßes angeordnet ist.

Aufgabe der Erfindung ist die Schaffung einer neuen Schließeinrichtung für ein Hochdruckgefäß, bestehend aus einem zylindrischen Mantel, in den ein Kolben koaxial eintaucht, mit einer dynamischen und einer statischen Dichtung, mit welcher eine verbesserte Schließ- bzw. Dichtfunktion erzielt werden kann.

Eine weitere Aufgabe der Erfindung ist die Schaffung einer Schließvorrichtung, deren Dichtung sich wenig abnützt und gegen Verschmutzung weitestgehend geschützt ist.

Eine zusätzliche Aufgabe ist die Schaffung einer Schließeinrichtung, mit deren Hilfe die Beschickung und Entsorgung des Preßraums mit Preßgut einfacher und leichter durchführbar ist.

Dies wird erfindungsgemäß dadurch erreicht, daß eine Brille oberhalb des Mantels mit einer mittigen kreisförmigen Öffnung, durch welche der obere Kolben axialen Durchgang hat, in Richtung der Kolbenachse verschiebbar angeordnet ist, wobei die Brille mit einer ersten Dichtung, die vorzugsweise im unteren Bereich der Öffnung am Kolben anliegend als dynamische Dichtung ausgeführt ist, und mit einer zweiten Dichtung, die im Schließzustand als statische Dichtung zwischen Brille und Mantel am Oberteil des Mantels anliegt, versehen ist.

Weitere Merkmale, Einzelheiten und Vorteile der Erfindung werden nachfolgend anhand der Figuren erläutert.

Es zeigen

Fig. 1 einen Aufriß einer Säulenpresse im Schnitt mit einer Schließeinrichtung gemäß der Erfindung, und

Fig. 2 das Dichtsystem der Schließeinrichtung nach Fig. 1 in vergrößerter Darstellung.

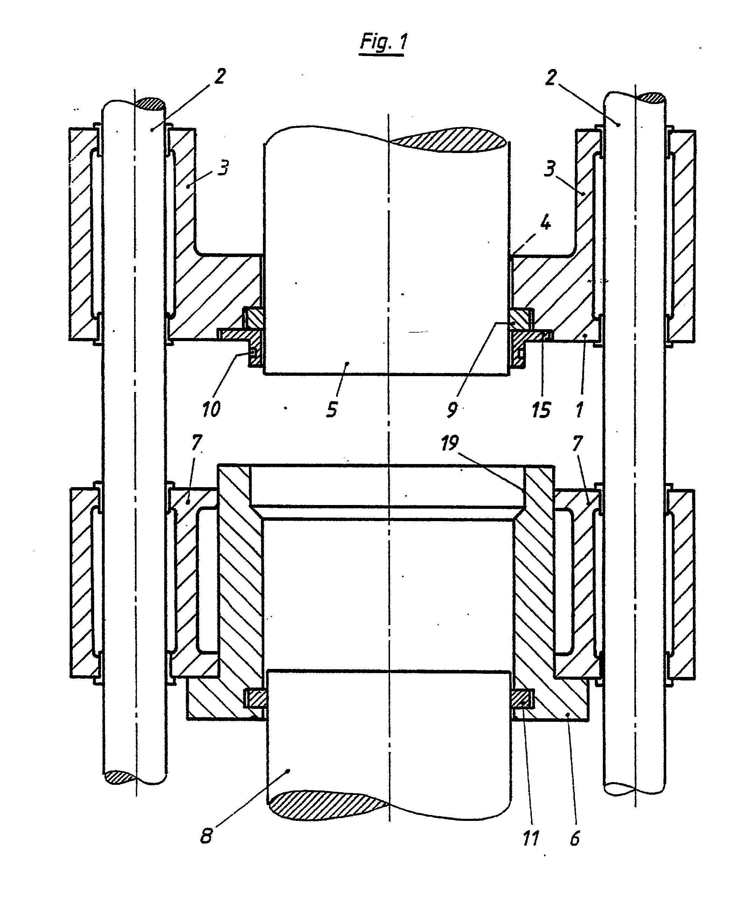

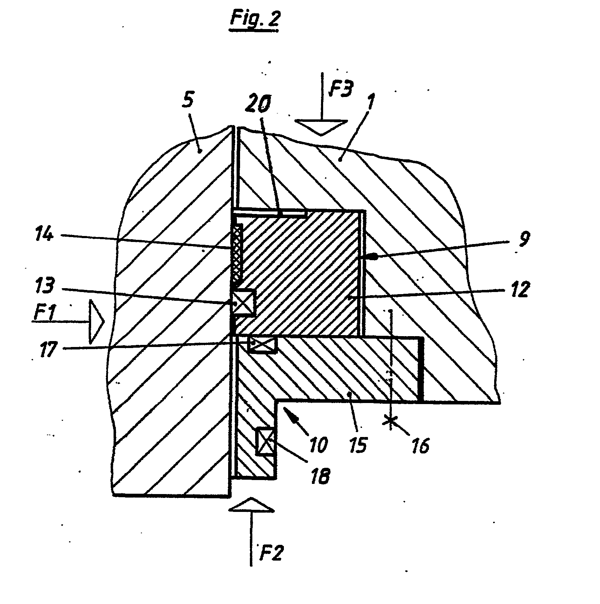

In Fig. 1 bezeichnet 1 eine Brille, die auf zumindest zwei Säulen 2 der Presse mittels Säulenkanonen 3 mit vergleichsweise zum Säulendurchmesser langer Führung geführt ist. Die Brille 1 weist in der Mitte eine kreisförmige Öffnung 4 auf, durch welche ein oberer Kolben 5 mit Spiel hindurchgeführt ist. Die Presse weist vorzugsweise insgesamt vier einander diametral gegenüberliegende Säulen auf, von welchen nur zwei dargestellt sind und auf welchen der Mantel 6 über Säulenkanonen 7 geführt ist. Ein unterer Kolben 8 ist relativ zu den Säulen und zum Fundament starr befestigt, und dringt von unten in den Mantel 6 ein. Der obere Kolben 5 ist mit einer dynamischen Dichtung 9 und mit einer statischen Dichtung 10 versehen, die in Fig. 2 detailliert dargestellt sind. Der untere Kolben 8 ist mit einer dynamischen Dichtung 11 versehen, die im wesentlichen mit der dynamischen Dichtung 9 des oberen Kolbens 5 ident ist. Die dynamische Dichtung 9 besteht aus einem schwimmenden Ring 12, der einen im wesentlichen rechteckigen Querschnitt aufweist und in einer entsprechenden Ausnehmung, vorzugsweise im unteren Bereich der Öffnung 4 in der Brille 1 mit radialem Spiel gelagert ist. Die dynamische Dichtung 9 kann aber auch im oberen Bereich der Öffnung 4 angeordnet sein. An der Innenseite des schwimmenden Rings 12 sind in entsprechenden Ausnehmungen eine Radialdichtung 13 und ein Führungsring 14 vorgesehen, die am oberen Kolben anliegen. Der schwimmende Ring 12 wird durch einen Zentrierflansch 15 gehalten, der seinerseits mittels Schrauben 16 an der Brille 1 befestigt ist.

Die Schrauben 16 führen durch Löcher im Zentrierflansch 15, deren Durchmesser größer ist als der Schraubendurchmesser. An der Oberseite des Zentrierflansches 15 befindet sich in einer Ausdrehung eine Plandichtung 17, die bei Einstellbewegungen des schwimmenden Rings 12 abdichtet. Der Zentrierflansch 15 weist eine nach unten gerichtete Verlängerung mit etwa dem Außendurchmesser der Dichtung 17 auf, deren Außenseite eine Radialdichtung 18 trägt. Infolge der gleichen Durchmesser der Dichtungen 17 und 18 ist der Zentrierflansch 15 axial hydraulisch entlastet. Die dynamische Dichtung 9 wird somit durch die im schwimmenden Ring 12 angeordnete Radialdichtung 13 und die Plandichtung 17 gebildet, während die statische Dichtung 10 durch die in der Verlängerung des Zentrierflansches 15 angeordnete Radialdichtung 18 gebildet wird, welche die Brille 1 im Schließzustand der Presse gegen den Mantel 6 abdichtet. Zu diesem Zweck weist der Mantel 6 am oberen Rand eine innenseitige Ausnehmung 19 mit vergrößertem Innendurchmesser auf, um die Verlängerung des Zentrierflansches im Schließzustand aufzunehmen (Fig. 1). Durch das Durchgangsspiel der Schrauben 16 kann der Zentrierflansch 15 bei der Montage nach der Ausnehmung 19 zentriert werden.

In Fig. 2 sind die am schwimmenden Ring 12 angreifenden Kräfte F1 bis F3 eingetragen, wobei F1 und F2 zwei die durch den hydraulischen Innendruck im Preßraum erzeugten Kräfte sind und F3 die Abstützkraft des schwimmenden Rings 12 an der Ausnehmung der Brille 1 ist. Damit die Kräfte F1, F2 und F3 kein störendes Torsionsmoment beim Aufweiten durch den Hydraulikdruck am schwimmenden Ring 12 erzeugen, ist an der Oberseite des schwimmenden Rings 12 eine Eindrehung, bzw. kreisförmige Ausnehmung 20 vorgesehen, sodaß eine verringerte, nach außen versetzte Auflagefläche entsteht, die eine Versetzung des Angriffspunktes der Kraft F3 und somit Momentenfreiheit bewirkt.

Die Dichtungen 13,17 und 18 bestehen vorzugsweise aus selbstschmierendem Material, wie Teflon, mit Federelementen aus Elastomeren oder Stahl.

Durch die besondere Ausgestaltung des Dichtsystems erfolgt keine Beanspruchung der Dichtungen 13 und 17 beim Schließvorgang, und der Mantel 6 kann mit großem Durchmesserspiel zum Kolben 5 ausgeführt werden. Letzteres gilt auch für den unteren Kolben 8. Die statische Dichtung 10 ist beim dargestellten Ausführungsbeispiel als Radialdichtung 18 ausgeführt, sie kann aber auch als axial wirkende Plandichtung ausgeführt werden, die am oberen Rand des Mantels 6 im Schließzustand anliegt. Die Brille 1 wird wie der Mantel 6 und der Kolben 5 vorzugsweise hydraulisch gehoben und gesenkt.

Die Höhe der Säulenkanonen 7 ist so gewählt, daß sie zumindest das Doppelte des Durchmessers der Säulen 2 beträgt. Hiedurch wird eine sichere Führung gegen Verkanten auch bei exzentrischem Kraftangriff des Schließantriebs erreicht. Außerdem ergibt sich ein geringeres radiales Spiel gegenüber einer zentralen Führung durch kleinere Führungsdurchmesser und eine kurze Toleranzkette zum Mantel 6.

**Patentansprüche**

1. Dichtsystem für ein Hochdruckgefäß, bestehend aus einem zylindrischen Mantel (6), in den ein oberer Kolben (5) koaxial eintaucht, insbesondere als Werkzeug einer hydraulischen Säulenpresse, mit einer dynamischen und einer statischen Dichtung (9, 10), dadurch gekennzeichnet, daß eine Brille (1) oberhalb des Mantels (6) mit einer mittigen kreisförmigen Öffnung (4), durch welche der obere Kolben (5) axialen Durchgang hat, in Richtung der Kolbenachse verschiebbar angeordnet ist, wobei die Brille mit einer ersten Dichtung (9), die vorzugsweise im unteren Bereich der Öffnung (4) am Kolben (5) anliegend, als dynamische Dichtung ausgeführt ist, und mit einer zweiten Dichtung (10), die im Schließzustand als statische Dichtung zwischen Brille (1) und Mantel (6) am Oberteil des Mantels (6) anliegt, versehen ist.

2. Dichtsystem nach Anspruch 1, dadurch gekennzeichnet, daß die erste Dichtung (9) aus einem schwimmenden Ring (12) besteht, der in einer Ausnehmung in der Brille (1) mit radialem Spiel gelagert ist und an der Innenseite eine Radialdichtung (13) und einen Führungsring (14) trägt, wobei an der Unterseite des schwimmenden Rings (12) eine Plandichtung (17) anliegt.

3. Dichtsystem nach Anspruch 2, dadurch gekennzeichnet, daß an der Oberseite des schwimmenden Rings (12) eine Eindrehung, bzw. kreisförmige Ausnehmung (20) vorgesehen ist, sodaß eine verringerte, nach außen versetzte Auflagefläche entsteht.

4. Dichtsystem nach den Ansprüchen 2 und 3, dadurch gekennzeichnet, daß die Plandichtung (17) in einem unterhalb des schwimmenden Rings (12) angeordneten Zentrierflansch (15) eingebettet ist.

5. Dichtsystem nach den Ansprüchen 1 und 4, dadurch gekennzeichnet, daß der Zentrierflansch (15) eine nach unten gerichtete Verlängerung mit im wesentlichen gleichen Außendurchmesser wie die Plandichtung (17) aufweist, deren Außenseite eine Radialdichtung (18) als statische Dichtung (10) trägt.

6. Dichtsystem nach den Ansprüchen 1 und 4, dadurch gekennzeichnet, daß der Zentrierflansch (15) als statische Dichtung (10) eine Plandichtung trägt, die auf der am oberen Rand des Mantels (6) aufliegenden Unterseite des Zentrierflansches (15) vorgesehen ist.

7. Dichtsystem nach Anspruch 1, dadurch gekennzeichnet, daß die Brille (1) zumindest auf zwei Säulen (2) einer Säulenpresse mittels Säulenkanonen (3) mit vergleichsweise zum Säulendurchmesser langer Führung geführt ist.

**Claims**

1. A sealing arrangement for a high-pressure container, comprising a cylindrical casing (6), which is penetrated coaxially by an upper piston (5), more particularly as a tool of a hydraulic press, having a dynamic and a static seal (9, 10), characterised in that a gland (1) is arranged above the casing (6) so as to be displaceable in the direction of the piston axis and comprises a central circular opening (4) through which the upper piston (5) passes axially, the gland being provided with a first seal (9), which is designed as a dynamic seal preferably resting against the piston (5) in the upper region of the opening (4), and having a second seal (10), which in the closed position rests as a static seal against the upper part of the casing (6) between the gland (1) and the casing (6).

2. A sealing arrangement according to claim 1, characterised in that the first seal (9) is formed by a floating ring (12) mounted with radial clearance in a recess in the gland (1) and on its inside carries a radial seal (13) and a guide ring (14), a plane seal (17) resting against the underside of the floating ring (12).

3. A sealing arrangement according to claim 2, characterised in that on the upper side of the floating ring (12) a groove or circular recess (20) is provided so that a reduced outwardly offset bearing surface is formed.

4. A sealing arrangement according to claims 2 and 3, characterised in that the plane seal (17) is embedded in a centring flange (15) arranged beneath the floating ring (12).

5. A sealing arrangement according to claims 1 and 4, characterised in that the centring flange (15) comprises a downwardly directed extension having essentially the same outer diameter as the plane seal (17), the outside of the extension carrying a radial seal (18) as a static seal (10).

6. A sealing arrangement according to claims 1 and 4, characterised in that the centring flange (15) supports a plane seal as a static seal (10), which is provided on the underside of the centring flange (15) resting against the upper edge of the casing (6).

7. A sealing arrangement according to claim 1, characterised in that the gland (1) is guided along at least two columns (2) of a hydraulic press by means of column guide bushings (3) having a guideway which is longer than the column diameter.

**Revendications**

1. Système d'étanchéité pour un récipient à haute pression, constitué d'une enveloppe (6) cylindrique dans laquelle pénètre coaxialement un piston (5) supérieur, en particulier un outil d'une presse hydraulique à colonnes, comportant une étanchéité dynamique (9) et une étanchéité statique (10), caractérisé en ce qu'une lunette (1), comportant une ouverture (4) centrale circulaire à travers laquelle passe axialement le piston (5) supérieur, est placée coulissante en direction de l'axe du piston, au-dessus de l'enveloppe (6), la lunette avec un premier joint d'étanchéité (9) qui s'applique sur le piston (5), de préférence dans la zone inférieure de l'ouverture (4), étant une étanchéité dynamique, et comportant un deuxième joint d'étanchéité (10) qui s'applique à l'état fermé, contre la partie supérieure de l'enveloppe (6), pour former une étanchéité statique entre la lunette (1) et l'enveloppe (6).

2. Système d'étanchéité selon la revendication 1, caractérisé en ce que le premier joint d'étanchéité (9) est constitué d'une bague (12) flottante qui est montée avec un jeu radial dans un évidement pratiqué dans la lunette (1), et porte sur sa face radiale, un joint d'étanchéité radial (13) et une bague de guidage (14), un joint d'étanchéité plan (17) s'appliquant sur la face inférieure de la bague (12) flottante.

3. Système d'étanchéité selon la revendication 2, caractérisé en ce qu'il est prévu une gorge tournée ou un évidement circulaire (20) sur la face supérieure de la bague flottante (12), de sorte qu'il se forme une surface d'appui réduite, décalée vers l'extérieur.

4. Système d'étanchéité selon les revendications 2 et 3, caractérisé en ce que le joint d'étanchéité plan (17) est logé dans une bride de centrage (15) placée au-dessous de la bague flottante (12).

5. Système d'étanchéité selon les revendications 1 et 4, caractérisé en ce que la bride de centrage (15) comporte un prolongement dirigé vers le bas de diamètre extérieur à peu près égal à celui du joint d'étanchéité plan (17), dont la face extérieure porte un joint d'étanchéité radial (18) pour former une étanchéité statique (10).

6. Système d'étanchéité selon les revendications 1 et 4, caractérisé en ce que la bride de centrage (15) porte comme étanchéité statique (10), un joint d'étanchéité plan qui est prévu sur la face inférieure de la bride de centrage (15) reposant sur le bord supérieur de l'enveloppe (6).

7. Système d'étanchéité selon la revendication 1, caractérisé en ce que la lunette (1) est guidée au moins sur deux colonnes (2) d'une presse à colonnes au moyen de canons de colonnes (3), par un organe de guidage long par rapport au diamètre des colonnes.

_Fig. 1_

*Fig. 2*